# EUROPÄISCHE PATENTSCHRIFT

(11) **EP 0 389 839 B1**
(45) Veröffentlichungstag und Bekanntmachung des Hinweises auf die Patenterteilung: **08.06.1994**
(21) Anmeldenummer: 90104390.1
(22) Anmeldetag: 08.03.1990
(51) Int. Cl.: F16F 13/00, B60K 5/12

(54) **Verspannbares, hydraulisch gedämpftes Lagerelement**
Elastic bearing element with hydraulic damping
Coussinet élastique à amortissement hydraulique

(30) Priorität: 25.03.1989 DE 3909852
(43) Veröffentlichungstag der Anmeldung: 03.10.1990
(73) Patentinhaber: Adam Opel Aktiengesellschaft, 65428 Rüsselsheim (DE)
(72) Erfinder: Roos, Jürgen, Dipl.-Ing. (FH), D-6097 Trebur 3 (DE)
(74) Vertreter: Bergerin, Ralf, Dipl.-Ing.

(56) Entgegenhaltungen:
- EP-A- 0 242 254
- EP-A- 0 278 801
- DE-A- 3 514 268
- DE-A- 3 723 986
- DE-U- 8 816 572
- GB-A- 2 207 214
- PATENT ABSTRACTS OF JAPAN vol. 10, no. 6 (M-445)(2063) 11 Januar 1986,& JP-A-60 168932 (TOYOTA) 02 September 1985,
- PATENT ABSTRACTS OF JAPAN vol. 9, no. 303 (M-434)(2026) 30 November 1985,& JP-A-60 139507 (NISSAN) 24 Juli 1985,

## Beschreibung

Die Erfindung bezieht sich auf ein verspannbares, hydraulisch gedämpftes Lagerelement zur elastischen Lagerung vibrierender Maschinenteile, insbesondere Motoren von Kraftfahrzeugen, mit einer äußeren Lagerhülse und einem von einem Elastomerkörper im Inneren gehaltenen Lagerkern, wobei der Elastomerkörper einen sich zwischen Lagerhülse und Lagerkern erstreckenden Ringraum in zwei Kammern unterteilt, die mit einer hydraulischen Flüssigkeit gefüllt und durch mindestens einen Ringkanal miteinander verbunden sind, wobei der Elastomerkörper an beiden Stirnseiten Abschlußwände für die Kammern bildet und mit einer als Membran ausgebildeten Druckentlastungseinrichtung und wobei die Membran einen Teilbereich zumindest einer der stirnseitigen Abschlußwände jeder Kammer bildet, mit einer Seite die jeweilige Kammer begrenzt, von der anderen Seite mit Atmosphärendruck beaufschlagt ist und Mittel zur Begrenzung der maximal möglichen Verformung der Membran zur Atmosphärenseite hin vorgesehen sind.

Bei verbrennungsmotorbetriebenen Kraftfahrzeugen besteht bekanntermaßen die Notwendigkeit, eine Überleitung der vom Motor ausgehenden Vibrationen und der damit verbundenen Geräusche auf die Fahrgastzelle nach Möglichkeit zu verhindern. Eine diesbezüglich bekannte Maßnahme besteht darin, den Motor auf sogenannten Hydrolagern anzuordnen.

Diese Hydrolager können als sogenannte Hydro-Rundbuchsen ausgebildet sein, welche gegenüber andersartigen Hydrolagern den Vorteil haben, daß sie auch bei engen Platzverhältnissen, wie sie speziell im Motorraum eines Personenkraftwagens, insbesondere bei frontangetriebenen Fahrzeugen gegeben sind, verwendet werden können.

Zu dem im vorstehenden kurz umrissenen Stand der Technik sind als Druckschriften die DE 35 14 268 A1 und die DE 37 23 986 A1 zu nennen.

Die DE 35 14 268 A1 zeigt ein Lagerelement, das stirnseitige Kappen aus elastisch verformbarem Material aufweist, die zwischen sich und dem vom Innenteil angenähert radial nach beiden Seiten verlaufenden Elastomerkörper auf einer Stirnseite Kanäle amplitudenartig veränderlichen Querschnittes zwischen der oberen und unteren Kammer bilden. Die genannten Maßnahmen sollen zur Absenkung der dynamischen Steifigkeit des Lagerelementes dienen. Sie sind allerdings nur bei niedrigen Frequenzen wirksam und werden durch eine partielle Reduktion der Elastomer-Wandstärke der Abschlußkappen erreicht. Die partiell weiche Seitenwand kann nur in engen Grenzen variiert werden, da dies einen starken Einfluß auf das Dämpfungsverhalten der Hydrobuchse hat: Je weicher die Wand, desto geringer das Dämpfungsvermögen.

Im Bereich der Triebwerklagerung ist es aber notwendig, auf kleinen Wegen eine ausreichende Dämpfung zu realisieren. Wichtig ist es bei der Lagerung von Triebwerken, vor allem im **hoch**frequenten Bereich wirksame Maßnahmen zur Geräuschverminderung zu treffen. Dieser Forderung wird das bekannte Lagerelement nach DE 35 14 268 A1 nicht gerecht.

Beim Gegenstand der DE 37 23 986 A1 handelt es sich um eine elastomere Dämpfungsvorrichtung der eingangs bezeichneten Art zum Tragen von Lasten und zum Dämpfen struktureller Einwirkungen, wie sie typischerweise als Motorhalterung in Kraftfahrzeugen eingesetzt werden kann. Die bekannte Dämpfungsvorrichtung weist ein starres Außengehäuse, ein starres Innenglied und eine elastomere Scherfeder auf. Innerhalb der Scherfeder sind flüssigkeitsenthaltende Kammern ausgebildet, welche über einen beschränkten Strömungspfad miteinander verbunden sind. Um das Hochfrequenz-Verhalten einer solchen Dämpfungsvorrichtung zu verbessern, ist innerhalb des Gehäuses eine mit den Flüssigkeitskammern in Wirkverbindung stehende Druckentlastungseinrichtung ausgebildet, um ausgewählt Druck abzubauen, der in den Kammern als Folge struktureller Einwirkungen auftritt. Man bezeichnet diese Druckentlastungsmaßnahmen als "Entkoppelung", die zwischen hochfrequenten, strukturellen Einwirkungen und den normalen, üblichen Feder- und Dämpferbelastungen unterscheidet und wirksam wird, um ein verbessertes Hochfrequenzverhalten der gesamten Motorhalterung zu gewährleisten.

Die beim Gegenstand der DE 37 23 986 A1 für eine akustisch wirksame Entkoppelung vorgesehene Membran ist am Außenumfang der Kammern, d.h. unmittelbar angrenzend an die Innenwandung der äußeren Lagerhülse, angeordnet. Dies hat den Nachteil, daß die Membran bei großer Nachgiebigkeit, wie sie im niederfrequenten Bereich auftritt, gegen das Außengehäuse (Lagerhülse) schlägt und Klopfgeräusche verursacht. Zum anderen ist radial zur Innenseite des Lagers hin kein Anschlag vorhanden, so daß die weiche Membran eine große Nachgiebigkeit aufweist. Hierdurch wird das zur niederfrequenten Schwingungsdämpfung erforderliche Dämpfungsangebot zumindest in einer Richtung stark eingeschränkt. Zwecks Erreichung einer akzeptablen Vorderbauunruhe werden Phasenwinkel größer 40 Grad benötigt. Mit dem Gegenstand nach DE 37 23 986 A1 lassen sich jedoch Phasenwinkel von nur 25 Grad erzielen.

Die Veröffentlichung Patent Abstract of Japan vol. 9, no. 303 (M-434) <2026> zeigt auch schon ein hydraulisch gedämpftes Lagerelement mit den Merkmalen des Oberbegriffs des Anspruchs 1. Bei dem aus dieser Veröffentlichung bekannten Lagerelement bestehen die Mittel zur Begrenzung der Verformung der Membran aus einer mit geringem axialen Abstand zur Membran angeordneten Wand. Dieser Abstand ist in etwa so groß wie die Membran dick ist und beträgt mehrere mm. Deshalb setzt die Niederfrequenzdämpfung erst bei einem Auftreten relativ großer Niederfrequenzamplituden ein.

Aufgabe der vorliegenden Erfindung ist es, ein Lagerelement der eingangs genannten Art so auszubilden, daß es den hohen Anforderungen, die an das Geräuschisolationsvermögen von Triebwerklagerungen in Personenkraftwagen gestellt werden, voll genügt, dennoch aber auch niederfrequente Schwingungen möglichst wirkungsvoll dämpft.

Diese Aufgabe wird erfindungsgemäß dadurch gelöst, daß in dem luftgefüllten Raum mehrere Rippen vorgesehen sind, welche einen schmalen Luftspalt belassen und die maximal mögliche Verformung der Membran begrenzen, und daß die Spaltweite des Luftspaltes in unverformtem Zustand der Membran ca. 0,1 bis 0,4 mm beträgt.

Durch diese Gestaltung vermag die Membran hochfrequente Schwingungen geringer Amplitude durch eine entsprechende Schwingungsbewegung zu dämpfen. Dadurch wird eine sehr gute akustische Isolation erreicht. Bei Schwingungen mit großer Amplitude wird die Membran nach Überwindung des engen Luftspaltes rasch wirkungslos, so daß das erfindungsgemäße Lagerelement dann eine ausreichende Steifigkeit erhält.

Durch die erfindungsgemäße Positionierung der Membran innen vor der stirnseitigen Abschlußwand des Lagerelementes einerseits und durch die Rippen andererseits wird ein hartes Anschlagen der Membran auf das metallische äußere Lagergehäuse und damit schon das Entstehen störender Klopfgeräusche vermieden. Des weiteren wird durch die Rippen und deren Gestaltung eine hohe Steifigkeit (bei leichtem Ansprechen) der Membran bei Auslenkungen, die größer oder kleiner als 0,2 mm in beiden Belastungsrichtungen sind, erzielt. Insgesamt wird durch die Erfindung eine Reduktion der dynamischen Federrate (ein Maß für das Isolationsvermögen) erreicht, die eine Verwendung des erfindungsgemäßen Lagerelementes als Triebwerklagerung auch an akustisch kritischen Fahrzeugen erlaubt.

Nach einer anderen erfindungsgemäßen Lösung, die zusätzlich zu der oben genannten Erfindung eingesetzt werden kann, wird die gestellte Aufgabe bei einem Lagerelement der eingangs bezeichneten Gattung dadurch gelöst, daß an einem Ende der äußeren Lagerhülse und radial außen von dieser begrenzt ein Ringkanal ausgebildet ist, der nicht mit den flüssigkeitsgefüllten Kammern verbunden, sondern axial innen durch eine ringförmige Membran von diesen abgeschlossen ist, und daß die Membran radial außen an der Lagerhülse und radial innen an der zugeordneten Abschlußwand angreift, vorzugsweise an letzterer anvulkanisiert ist, und daß der Ringkanal mit Luft gefüllt ist.

Auch durch eine solche Membran laßt sich eine akustisch wirksame "Entkoppelung" erzielen.

Zur Veranschaulichung und näheren Erläuterung der Erfindung dienen zwei Ausführungsbeispiele, die in der Zeichnung dargestellt und nachstehend ausführlich beschrieben sind. Es zeigt:
- Fig.1: eine Ausführungsform eines Lagerelementes nach der Erfindung, in Draufsicht betrachtet,
- Fig.2: einen Schnitt längs der Linie II - II in Fig. 1,
- Fig.3: eine andere Ausführungsform eines erfindungsgemäßen Lagerelementes, in (hälftiger) Schnittdarstellung entsprechend Fig. 2

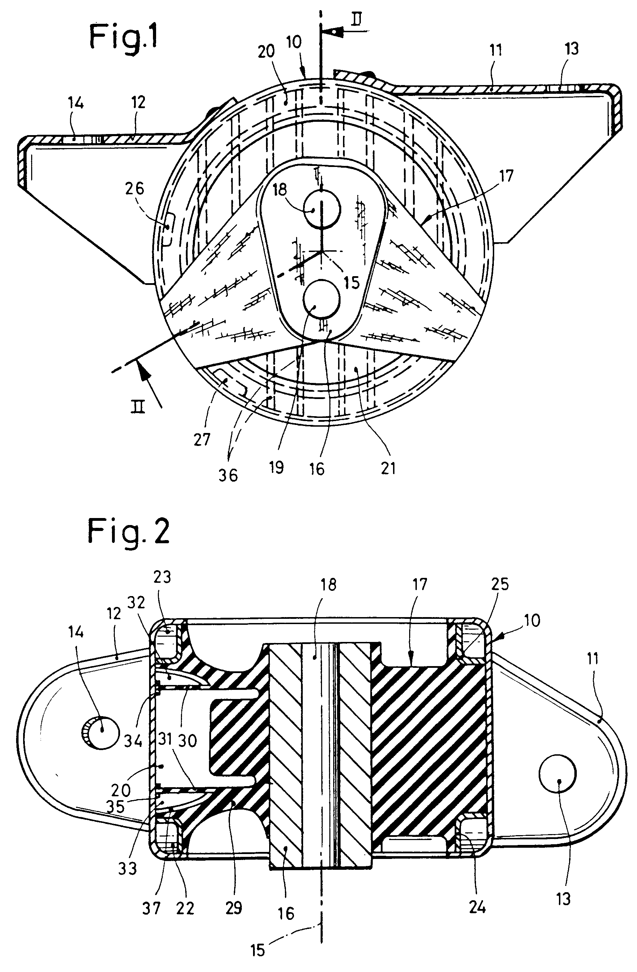

Nach Fig. 1 und 2 bezeichnet 10 eine metallische äußere Lagerhülse, die zylinderförmig ausgebildet ist. Am Außenumfang der Lagerhülse 10 sind zwei laschenartige Befestigungselemente 11 und 12 angepunktet, die zur Befestigung des Lagerelementes an tragenden Teilen, z.B. an dem Vorderbau eines Kraftfahrzeuges, dienen. Bohrungen zum Durchstecken von geeigneten Befestigungsschrauben (nicht gezeigt) sind mit 13 und 14 beziffert.

Im Inneren der Lagerhülse 10 ist ein in seiner Längserstreckung parallel zur Längsmittelachse 15 der Lagerhülse 10 gerichteter metallischer Lagerkern 16 angeordnet, der durch einen insgesamt mit 17 bezeichneten Elastomerkörper im Zentrum der Lagerhülse 10 gehalten bzw. mit dieser elastisch verbunden ist. Der Lagerkern 16 besitzt zwei axiale Bohrungen 18 und 19, die zum Durchstecken von (nicht gezeigten) Befestigungsschrauben und damit zur Befestigung eines vibrierenden Maschinenteils, z.B. einer Verbrennungskraftmaschine, an dem Lagerelement vorgesehen sind.

Wie die Zeichnung, insbesondere Fig. 1, weiterhin erkennen läßt, ist der Elastomerkörper 17 in seinem Inneren an zwei etwa diametral gegenüberliegenden Bereichen hohl ausgestaltet und bildet dort zwei Kammern 20 und 21, die mit Hydraulikflüssigkeit gefüllt sind. Des weiteren sind an den stirnseitigen Enden des Lagerelementes bzw. der Lagerhülse 10 zwei Ringkanäle 22 und 23 ausgebildet, die ebenfalls mit Hydraulikflüssigkeit gefüllt sind. Die Ringkanäle 22, 23 werden außenseitig durch die Wand der Lagerhülse 10, die stirnseitig jeweils nach innen umgebördelt ist, und innenseitig durch ein im Querschnitt winkelförmiges Ringelement 24 bzw. 25 gebildet. Fig. 2 macht deutlich, daß die Ringelemente 24, 25 im Elastomerkörper 17 gehalten bzw. in diesen einvulkanisiert sind. Die Ringkanäle 22, 23 haben die Aufgabe, die beiden flüssigkeitsgefüllten Kammern 20 und 21 miteinander zu verbinden. Entsprechende Verbindungsöffnungen im Ringkanal 23 einerseits und im Ringkanal 22 andererseits sind in Fig. 1 angedeutet und mit 26 bzw. 27 bezeichnet.

Wie des weiteren aus Fig. 2 hervorgeht, ist die flüssigkeitsgefüllte Kammer 20 (und entsprechend auch die aus Fig. 2 nicht ersichtliche andere flüssigkeitsgefüllte Kammer 21) an beiden Stirnseiten jeweils durch eine Abschlußwand 28 bzw. 29 abgeschlossen. Die Abschlußwände 28, 29 bestehen aus demselben elastomeren Material wie der Elastomerkörper 17 und sind zweckmäßigerweise einstückig mit diesem ausgebildet. Fig. 2 macht des weiteren deutlich, daß an den beiden Stirnseiten der Kammer 20 (und ebenso auch an den beiden Stirnseiten der aus Fig. 2 nicht ersichtlichen Kammer 21), jeweils auf der Innenseite der betreffenden Abschlußwand 28 bzw. 29, eine Membran 30 bzw. 31 angeordnet bzw. ausgebildet ist, und zwar derart, daß sich zwischen Abschlußwand 28 bzw. 29 und zugeordneter Membran 30 bzw. 31 jeweils ein luftgefüllter Raum 32 bzw. 33 ergibt. Die Membranen bestehen aus einem elastisch verformbaren, elastomeren Material, welches identisch mit dem Material des Elastomerkörpers 17 sein kann. An ihrem Außenumfang werden die Membranen 30, 31 jeweils durch einen von der äußeren Lagerhülse 10 gehaltenen Spannring 34 bzw. 35 mit der Lagerhülse 10 verbunden. Radial innen greifen die Membranen 30, 31 unmittelbar an den Abschlußwänden 28, 29 an, sind zweckmäßigerweise an diese anvulkanisiert bzw. mit diesen einstückig hergestellt.

Wie insbesondere aus Fig. 1 erkennbar ist, sind auf den Membranen 30, 31 jeweils mehrere parallel zueinander angeordnete Rippen 36 angeordnet, die als Versteifungsrippen fungieren. Die senkrecht oder im wesentlichen senkrecht auf der jeweiligen Membran 30 bzw. 31 angeordneten Rippen 36 greifen an ihren freien Enden nicht an der angrenzenden Abschlußwand 28 bzw. 29 an, sondern bilden gegenüber dieser einen schmalen Luftspalt 37. Durch die Rippen 36 werden die Membranen 30, 31 jeweils im axialen Abstand von der zugeordneten Abschlußwand 28 bzw. 29 gehalten. Die Rippen 36 bestehen zweckmäßigerweise ebenfalls aus demselben Material wie der Elastomerkörper 17 und die Membranen 30, 31, wodurch eine einstückige Herstellung der Rippen 36 mit den Membranen 30, 31 bzw. ein Anvulkanisieren an dieselben ermöglicht wird.

Der Luftspalt 37 zwischen den freien Enden der Rippen 36 und der angrenzenden Abschlußwand - nach Fig. 2 ist dies die Abschlußwand 29 - haben die Aufgabe, bei sehr kleinen Schwingungsanregungen eine hohe Nachgiebigkeit der betreffenden Membran 30 bzw. 31 zu erzielen. Zweckmäßigerweise ist eine Spaltweite von ca. 0,1 bis 0,4 mm zu wählen. Das genaue Maß kann jeweils im praktischen Versuch ermittelt werden. Durch die genannten Maßnahmen wird bei kleinen Anregungen, wie sie im akustischen Bereich auftreten, verhindert, daß Hydraulikflüssigkeit von der einen Kammer 20 in die andere Kammer 21 (bzw. in umgekehrter Richtung) gepumpt werden muß, was durch die Massenträgheit der Hydraulikflüssigkeit und die Reibung im Ringkanal erschwert ist. Bei Lagerelementen ohne Entkoppelungseinrichtung kommt es deshalb bei hochfrequenten Schwingungen zu Druckanstiegen im Lager, was einen Anstieg der dynamischen Federrate und damit ein schlechteres Isolationsverhalten zur Folge hat. Die erfindungsgemäße Druckentlastungseinrichtung verhindert diesen Druckanstieg.

Bei größeren Bewegungen der Membranen 30, 31 dagegen kommen die Rippen 36 jeweils mit der angrenzenden Abschlußwand 28 bzw. 29 zur Anlage, und die Hydraulikflüssigkeit kann infolgedessen unter Erzeugung einer hohen Dämpfung von der einen Kammer 20 in die andere Kammer 21 und umgekehrt gepumpt werden.

Das in den Figuren 1 und 2 gezeigte Lagerelement könnte natürlich auch an nur einer Seite mit der als Entkoppelungseinrichtung dienenden Membran 30 oder 31 ausgebildet sein.

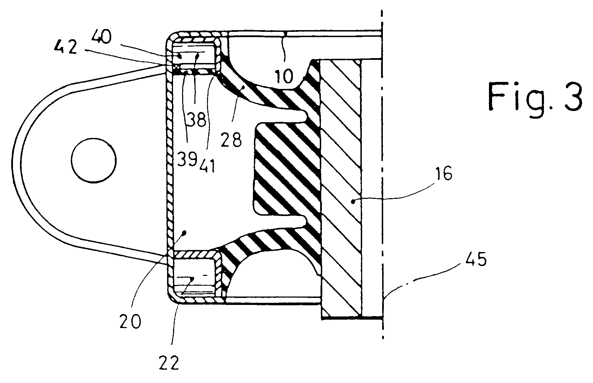

Bei der Ausführungsform nach Fig. 3 ist der hier mit 38 bezeichnete obere Ringkanal andersartig ausgebildet als bei der Ausführungsform nach Fig. 1 und 2. Der Unterschied besteht darin, daß der Ringkanal 38 durch eine elastische Membran 39 zur Kammer 20 hin verschlossen ist. Der Ringkanal 38 ist also nicht mit der Kammer 20 hydraulisch verbunden. Vielmehr ist im Inneren des Ringkanals 38 eine luftgefüllte Kammer 30 ausgebildet. Die Membran 39 ist radial innen bei 41 an die Abschlußwand 28 anvulkanisiert. Radial außen greift die ringförmige Membran 39 durch einen Stützring 42 an der äußeren Lagerhülse 10 an. Die Membran 39 übt zusammen mit dem durch sie abgeschlossenen, luftgefüllten, ringförmigen Raum 40 eine ähnliche Funktion aus wie die beiden Membranen 30, 31 nach Fig. 1 und 2.

Der untere Ringkanal ist bei der Ausführungsform nach Fig. 3 ebenso ausgebildet wie bei der Ausführungsform nach Fig. 1 und 2 und daher entsprechend mit 22 beziffert. Er ist mit Hydraulikflüssigkeit gefüllt und durch eine Verbindungsöffnung (in Fig. 3 nicht gezeigt) mit der Kammer 20 verbunden.

## Patentansprüche

1. Verspannbares, hydraulisch gedämpftes Lagerelement zur elastischen Lagerung vibrierender Maschinenteile, insbesondere Motoren von Kraftfahrzeugen, mit einer äußeren Lagerhülse (10) und einem von einem Elastomerkörper (17) im Inneren gehaltenen Lagerkern (16), wobei der Elastomerkörper (17) einen sich zwischen Lagerhülse (10) und Lagerkern erstreckenden Ringraum in zwei Kammern (20, 21) unterteilt, die mit einer hydraulischen Flüssigkeit gefüllt und durch mindestens einen Ringkanal (22, 23) miteinander verbunden sind, wobei der Elastomerkörper (17) an beiden Stirnseiten Abschlußwände (28, 29) für die Kammern (20, 21) bildet und mit einer als Membran (30, 31) ausgebildeten Druckentlastungseinrichtung, wobei die Membran (30, 31) einen Teilbereich zumindest einer der stirnseitigen Abschlußwände (28, 29) jeder Kammer (20, 21) bildet, mit einer Seite die jeweilige Kammer (20, 21) begrenzt, von der anderen Seite mit Atmosphärendruck beaufschlagt ist und Mittel zur Begrenzung der maximal möglichen Verformung der Membran (30, 31) zur Atmosphärenseite hin vorgesehen sind und wobei die Abschlußwände (28, 29) auf der der Kammer (20, 21) abgewandten Seite mit Abstand von der Membran (30, 31) zur Lagerhülse (10) geführt sind, so daß zwischen der Membran (30, 31) und der jeweiligen Abschlußwand (28, 29) jeweils ein luftgefüllter Raum (32, 33) entsteht, **dadurch gekennzeichnet**, daß in dem Luftgefüllten Raum mehrere Rippen (36) vorgesehen sind, welche einen schmalen Luftspalt (37) belassen und die maximal mögliche Verformung der Membran (30, 31) begrenzen, und daß die Spaltweite des Luftspaltes (37) in unverformtem Zustand der Membran ca. 0,1 bis 0,4 mm beträgt.

2. Lagerelement nach Anspruch 1, **dadurch gekennzeichnet**, daß die Rippen (36) parallel zueinander senkrecht auf der Membran (30, 31) angeordnet sind und am freien Ende nicht an der angrenzenden Abschlußwand (29) angreifen, sondern dort den schmalen Luftspalt (37) bilden.

3. Lagerelement nach den Ansprüchen 1 oder 2, **dadurch gekennzeichnet**, daß die Membran (30, 31) an ihrem Außenumfang durch einen von der äußeren Lagerhülse (10) gehaltenen Spannring (34 bzw. 35) an der Lagerhülse (10) angreift.

4. Lagerelement nach einem oder mehreren der vorstehenden Ansprüche, **dadurch gekennzeichnet**, daß der Elastomerkörper (17), die Membranen (30, 31) und Rippen (36) aus einund demselben Material bestehen und einstückig hergestellt oder durch Vulkanisieren miteinander verbunden sind.

5. Lagerelement nach einem oder mehreren der vorstehenden Ansprüche, **dadurch gekennzeichnet**, daß an einem Ende der äußeren Lagerhülse (10) und radial außen von dieser begrenzt ein Ringkanal (38) ausgebildet ist, der nicht mit den flüssigkeitsgefüllten Kammern (20) verbunden, sondern axial innen durch eine ringförmige Membran (39) von diesen abgeschlossen ist, und daß die ringförmige Membran (39) radial außen an der Lagerhülse (10) und radial innen an der zugeordneten Abschlußwand (28) angreift, vorzugsweise an letzterer anvulkanisiert ist, und daß der Ringkanal (39) mit Luft gefüllt ist (Fig. 3).

6. Lagerelement nach einem oder mehreren der vorstehenden Ansprüche, **dadurch gekennzeichnet**, daß die ringförmige Membran (39) radial außen mittels eines Stützringes (42) an der äußeren Lagerhülse (10) befestigt ist.

## Claims

1. Tensile, hydraulically dampened bearing element for elastically mounting vibrating engine parts, especially engines of motor vehicles, with an outer bearing sleeve (10) and a bearing core (16) held inside by an elastomeric body (17), wherein an annular chamber extending between the bearing sleeve (10) and the bearing core is split by the elastomeric body (17) into two chambers (20, 21) which are filled with a hydraulic fluid and which are connected to each other by at least one annular channel (22, 23), in which the two end faces of the elastomeric body (17) form terminal walls (28, 29) for the chambers (20, 21), and with a pressure release device in the form of a membrane (30, 31), the membrane (30, 31) forming a part of at least one of the front-facing terminal walls (28, 29) of each chamber (20, 21), with one side delimiting the respective chamber (20, 21), being subjected to atmospheric pressure from the other side and means being provided for delimiting the maximum possible deformation of the membrane (30, 31) facing the side to the atmosphere and wherein the terminal walls (28, 29) on the side facing away from the chamber (20, 21) are directed to the bearing sleeve (10) at a distance from the membrane (30, 31), so that between the membrane (30, 31) and the respective terminal wall (28, 29) there is created in each case an air-filled chamber (32,33), **characterised** in that in the air-filled chamber there are provided a plurality of ribs (36) which leave a narrow air gap (37) and delimit the maximum possible deformation of the membrane (30, 31), and that the gap width of the air gap (37) is approximately 0,1 to 0,4 mm when the membrane is in the non-deformed state.

2. Bearing element according to claim 1, **characterised** in that the ribs (36) are vertically arranged on the membrane (30, 31) parallel to each other and at the exposed end do not engage with the adjacent terminal wall (29), but form the narrow air gap (37) at this place. the narrow air gap (37) at this place.

3. Bearing element according to the claims 1 or 2, **characterised** in that the outer circumference of the membrane (30, 31) engages the bearing sleeve (10) through a clamping ring (34 or 35) held by the outer bearing sleeve (10).

4. Bearing element according to one or more of the preceding claims, **characterized** in that the elastomeric body (17), the membrane (30, 31) and the ribs (36) consist of one and the same material and are manufactured in one piece or are connected together by vulcanisation.

5. Bearing element according to one or more of the preceding claims, **characterised** in that at one end of the outer bearing sleeve (10) and delimited radially outside by this bearing sleeve (10) is formed an annular channel (38) which is not connected with the fluid-filled chambers (20), but axially inside is shut off from these by an annular membrane (39), and that the annular membrane (39) engages the bearing sleeve (10) radially on the outside and the associated terminal wall (28) radially on the outside, preferably vulcanised to the latter, and that the annular channel (39) is filled with air (Fig. 3).

6. Bearing element according to one or more of the preceding claims, **characterised** in that the annular membrane (39) is secured to the outer bearing sleeve (10) radially on the outside by means of a supporting ring (42).

## Revendications

1. Elément de support ou coussinet élastique à amortissement hydraulique pour le montage élastique d'éléments de machines vibrants, en particulier de moteurs de véhicules automobiles, comprenant une douille de support extérieure (10), un noyau de support (16) maintenu à l'intérieur par un corps en élastomère (17) subdivisant un espace annulaire entre la douille de support (10) et le noyau de support en deux compartiments (20, 21) qui sont remplis d'un liquide hydraulique et sont reliés entre eux par au moins un canal annulaire (22, 23), le corps en élastomère (17) formant sur les deux côtés frontaux des parois de fermeture (28, 29) pour les compartiments (20, 21), et un dispositif de décharge de pression réalisé sous forme de membrane (30, 31) , laquelle forme une partie au moins d'une des parois frontales de fermeture (28, 29) de chaque compartiment (20, 21) , délimite par un côté le compartiment respectif (20, 21) et est sollicitée par l'autre côté par la pression atmosphérique, des moyens étant prévus pour limiter la déformation maximale possible de la membrane (30, 31) vers le côté atmosphère, à l'état non déformé de la membrane, et les parois de fermeture (28, 29) s'étendant, sur le côté éloigné du compartiment (20, 21) , à distance de la membrane (30, 31) vers la douille de support (10) de manière qu'un espace (32, 33) rempli d'air se trouve entre la membrane (30, 31) et chaque paroi de fermeture (28, 29), caractérisé par le fait que dans l'espace rempli d'air sont prévues plusieurs nervures (36) qui laissent subsister un interstice étroit (37) et limitent la déformation maximale possible de la membrane (30, 31) , et que la largeur de l'interstice (37) , à l'état non déformé de la membrane, s'élève à environ 0,1 à 0,4 mm.

2. Elément de support suivant la revendication 1, caractérisé par le fait que les nervures (36) sont disposées parallèlement entre elles et perpendiculairement à la membrane (30, 31) et, à leurs extrémités libres, ne sont pas reliées à la paroi de fermeture (29) contiguë, mais forment ici l'interstice étroit (37).

3. Elément de support suivant les revendications 1 ou 2, caractérisé par le fait que la membrane (30, 31) est reliée à son pourtour extérieur à la douille de support extérieure (10) par une bague de serrage (34, 35) maintenue par la douille de support extérieure (10).

4. Elément de support suivant une ou plusieurs des revendications précédentes, caractérisé par le fait que le corps en élastomère (17) , les membranes (30, 31) et les nervures (36) sont réalisés à partir d'un seul et même matériau et sont fabriqués d'une seule pièce ou reliés entre eux par vulcanisation.

5. Elément de support suivant une ou plusieurs des revendications précédentes, caractérisé par le fait qu'un canal annulaire (38) est formé à une extrémité de la douille de support extérieure (10) en étant délimité radialement vers l'extérieur par cette douille, ledit canal n'étant pas relié aux compartiments (20) remplis de liquide, mais séparé axialement vers l'intérieur de ces compartiments par une membrane annulaire (39), que la membrane annulaire (39) est reliée radialement à l'extérieur à la douille de support (10) et radialement à l'intérieur à la paroi de fermeture (28) associée, de préférence en étant vulcanisée sur cette dernière, et que le canal annulaire (39) est rempli d'air (Figure 3).

6. Elément de support suivant une ou plusieurs des revendications précédentes, caractérisé par le fait que la membrane annulaire (39) est fixée radialement à l'extérieur au moyen d'une bague d'appui (42) à la douille de support extérieure (10).
